# EUROPEAN PATENT APPLICATION

(11) **EP 3 378 970 A1**
(43) Date of publication of application: **26.09.2018**
(21) Application number: 17189673.1
(22) Date of filing: 06.09.2017
(51) Int. Cl.: C25B 13/08, C25B 1/10

(54) **LAMINATED ELECTROLYTE MEMBRANE, MEMBRANE ELECTRODE ASSEMBLY, WATER ELECTROLYSIS CELL, STACK AND WATER ELECTROLYSIS APPARATUS**

(30) Priority: 23.03.2017 JP 2017057954
(71) Applicant: KABUSHIKI KAISHA TOSHIBA, Minato-ku Tokyo 105-8001 (JP)
(72) Inventor: NAKANO, Yoshihiko, Tokyo, 105-8001 (JP); MEI, Wu, Tokyo, 195-8001 (JP); YOSHINAGA, Norihiro, Tokyo, 105-8001 (JP); IIDA, Atsuko, Tokyo, 105-8001 (JP)
(74) Representative: Moreland, David

(57) **Abstract**

A laminated electrolyte membrane of an embodiment includes: a hydrocarbon-based electrolyte membrane; and a composite electrolyte membrane laminated with the hydrocarbon-based electrolyte, the composite electrolyte membrane containing a perfluorosulfonic acid-based electrolyte and a superstrong acid metal oxide having an acid function (H0) of -12 or less.

## Description

### FIELD

Embodiments described herein relate to a laminated electrolyte membrane, a membrane electrode assembly, a water electrolysis cell, a stack, and a water electrolysis apparatus.

### BACKGROUND

Currently, fuel cells are attracting attention and being developed as a clean power generation system that can reduce environmental load. In particular, the fuel cells are beginning to be used in various fields such as home use power supply fuel cells (Enefarm (TM)), on-vehicle fuel cells, buses, and trains. On the other hand, it is essential to reduce CO₂ emissions as measures to prevent global warming, and renewable energy such as solar batteries and wind power generators is actively utilized as clean energy that does not emit CO₂. Producible energy of these types of renewable energy is greatly influenced by weather. Therefore, such renewable energy is considered as a stable power supply system such as a power storage by a secondary battery or return to chemical energy by compound synthesis.

In recent years, a "hydrogen society" has been proposed in a clean energy supply system that produces hydrogen from renewable energy and generates power by using a fuel cell. From these facts, hydrogen is attracting attention for returning from electric energy to a compound (chemical energy), and examples of a method for producing hydrogen include alkaline water electrolysis, solid polymer electrolyte (PEM) type water electrolysis, and solid oxide type water electrolysis (SOEC). Recently, PEM type water electrolysis has been extensively studied as highly efficient water electrolysis.

For example, in a PEM type water electrolysis apparatus, a platinum group metal is bonded to both sides of a solid polymer electrolyte membrane (fluororesin based cation exchange membrane) so as to be integrated with a membrane, one side is an anode, and the other side is a cathode. When a DC voltage is applied between the electrodes while supplying water to the anode side, oxygen gas is generated from the anode, and hydrogen gas is generated from the cathode. The polymer electrolyte membrane functions as a diaphragm, and the generated hydrogen gas and oxygen gas can be taken out separately.

In order to improve the performance of PEM type water electrolysis, it is necessary to reduce membrane resistance by improving proton conductivity of the electrolyte membrane. However, although thinning the electrolyte membrane improves the conductivity, in addition to a problem that crossover of oxygen from the anode to the cathode and crossover of hydrogen from the cathode to the anode greatly increase, a reduction in mechanical strength is a problem.

In the polymer electrolyte membrane, a fluorine-based electrolyte membrane being used at present is reducing the resistance by thinning. However, the reduction in mechanical strength and an increase in gas permeability are maj or problems. As an electrolyte membrane used for a water electric field, a hydrocarbon-based electrolyte membrane is known besides a fluorine-based electrolyte membrane. In the hydrocarbon-based electrolyte membrane, gas permeability is about several minutes or less that is less than that of the fluorine-based electrolyte membrane. However, the hydrocarbon-based electrolyte membrane has radical resistance significantly lower than that of the fluorine-based electrolyte membrane and has low durability. In such a current situation, a water electrolysis electrolyte membrane having high performance and durability and a membrane electrode assembly using the same are required for further improvement in performance.

### BRIEF DESCRIPTION OF THE DRAWINGS

FIG. 1 is a cross-sectional view of a laminated electrolyte membrane according to embodiments described herein;
FIG. 2 is a cross-sectional view of a laminated electrolyte membrane according to the embodiments;
FIG. 3 is a cross-sectional view of a membrane electrode assembly according to the embodiments;
FIGS. 4A, 4B,4C, and 4D are low magnification transmission-type microphotographs of a catalyst cross section according to the embodiments;
FIG. 5 is a cross-sectional view of a water electrolysis cell according to the embodiments;
FIG. 6 is a cross-sectional view of a stack according to the embodiments; and
FIG. 7 is a schematic diagram of a water electrolysis apparatus according to the embodiments.

### DETAILED DESCRIPTION

A laminated electrolyte membrane of an embodiment includes: a hydrocarbon-based electrolyte membrane; and a composite electrolyte membrane laminated with the hydrocarbon-based electrolyte, the composite electrolyte membrane containing a perfluorosulfonic acid-based electrolyte and a superstrong acid metal oxide having an acid function (H0) of -12 or less.

Hereinafter, embodiments will be described in detail with reference to the drawings. In the following description, same members are denoted by same reference signs, and description of such as members once described is omitted as appropriate.

### (First Embodiment)

A laminated electrolyte membrane according to a first embodiment includes a hydrocarbon-based electrolyte membrane and a composite electrolyte membrane. The composite electrolyte membrane is laminated with the hydrocarbon-based electrolyte and contains a perfluorosulfonic acid-based electrolyte and a superstrong acid metal oxide having an acid function (H0) of -12 or less. When the laminated electrolyte membrane according to the embodiment is used as a water electrolysis electrolyte membrane, it is preferable in view of low membrane resistance of the electrolyte membrane, low crossover, and low resistance.

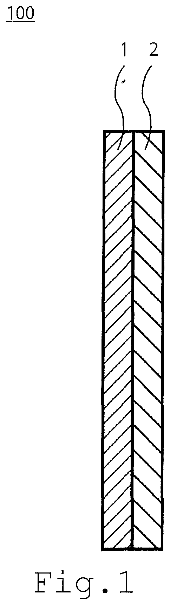

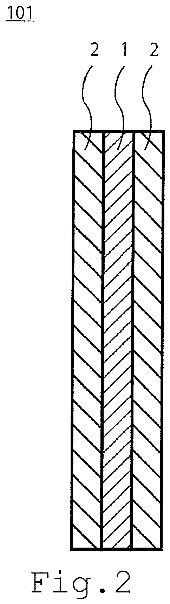

FIG. 1 is a cross-sectional view of a laminated electrolyte membrane 100 according to the first embodiment. The laminated electrolyte membrane 100 illustrated in FIG. 1 includes a hydrocarbon-based electrolyte membrane 1 and a composite electrolyte membrane 2. As in a laminated electrolyte membrane 101 illustrated in FIG. 2, the hydrocarbon-based electrolyte membrane 1 may be interposed between the composite electrolyte membranes 2. The laminated electrolyte membranes 100 and 101 may be laminated with the hydrocarbon-based electrolyte membrane 1 and the composite electrolyte membranes 2. It is preferable that the hydrocarbon-based electrolyte membrane 1 and the composite electrolyte membrane 2 have a laminated structure in direct contact. At least a part of a surface facing the composite electrolyte membrane 2 of the hydrocarbon-based electrolyte membrane 1 and at least a part of a surface facing the hydrocarbon-based electrolyte membrane 1 of the composite electrolyte membrane 2 are in direct contact. It is preferable that the whole surface of the surface facing the composite electrolyte membrane 2 of the hydrocarbon-based electrolyte membrane 1 and the whole surface facing the hydrocarbon-based electrolyte membrane 1 of the composite electrolyte membrane 2 are in direct contact with each other for the reason described in the embodiment.

The thickness of the laminated electrolyte membranes 100 and 101 is preferably 20 µm or more and 400 µm or less. It is not preferable that the thickness of the laminated electrolyte membranes 100 and 101 is less than 20 µm, because the mechanical strength and durability are deteriorated due to the thin membrane. Further, it is not preferable that the thickness of the laminated electrolyte membranes 100 and 101 is thicker than 400 µm, because membrane resistance becomes high, and the efficiency of water electrolysis is lowered. For the above-described reasons, the thickness of the laminated electrolyte membranes 100 and 101 is more preferably 30 µm or more and 150 µm or less, and even more preferably 35 µm or more and 53 µm or less.

In the hydrocarbon-based electrolyte membrane 1, gas permeability per unit membrane thickness is preferably smaller than nafion (trademark) of a fluorine-based electrolyte membrane. The hydrocarbon-based electrolyte membrane 1 is an electrolyte membrane using a hydrocarbon-based polymer electrolyte which does not contain fluorine as a main chain skeleton and has a heat-resistant main chain skeleton. The thickness of the hydrocarbon-based electrolyte membrane 1 is preferably 10 µm or more and 150 µm or less, and more preferably 13 µm or more and 40 µm or less.

The hydrocarbon-based polymer electrolyte is preferably a solid polymer electrolyte having a heat-resistant main chain skeleton. For the hydrocarbon-based polymer electrolyte, a polymer having a functional group such as a sulfonic acid group, a carboxylic acid group, a phosphonic acid group, a phosphinic acid group, a sulfonylimide group, and a phenolic hydroxyl group is used. Specific examples of the hydrocarbon-based polymer electrolyte include polyarylene-based, polyetheretherketone-based, polyether sulfone-based, polyphenylene sulfide-based, polyimide-based, and polybenzazole-based polymers in which main chain aromatic rings are sulfonated.

Furthermore, in order to increase the mechanical strength of these electrolyte membranes, the hydrocarbon-based electrolyte membrane 1 reinforced with a porous membrane may be used. Examples of specific porous membranes include, but are not limited to, polytetrafluoroethylene (PTFE), polyetheretherketone (PEEK), and polypropylene (PP). Further, a membrane to which additives are added can also be used to increase chemical durability. Examples of the additives include a radical scavenger and a radical decomposer. For example, an organic phosphorus compound, an aromatic amine-based compound, a phenol-based compound, a thioether-based compound, CeO₂, and MnO₂ can be used as additives. The radical scavenger or hydrogen peroxide decomposer is contained in the hydrocarbon-based electrolyte membrane 1 at a ratio of 0 mass% or more and 10 mass% or less.

The composite electrolyte membrane 2 is a membrane of a mixture containing a perfluorosulfonic acid-based electrolyte and a superstrong acid metal oxide having an acid function (H0) of -12 or less. The composite electrolyte membrane 2 has excellent adhesiveness with the hydrocarbon-based electrolyte membrane 1 and imparts chemical resistance to an electrolyte membrane of a laminated electrolyte membrane. It is preferable that the superstrong acid metal oxide having an acid function (H0) of -12 or less in the composite electrolyte membrane is 20 mass% or more and 80 mass% or less. If the superstrong acid metal oxide is less than 20 mass%, the composite electrolyte membrane 2 laminated with the hydrocarbon-based electrolyte membrane 1 tends to peel off in water. Therefore, it becomes difficult to use as a water electrolysis electrolyte. It is not preferable that the hydrocarbon-based electrolyte membrane 1 and the composite electrolyte membrane 2 are peeled off in water, because an electrolysis voltage rises. On the other hand, it is not preferable that the superstrong acid metal oxide exceeds 80 mass%, because membrane resistance increases, and it becomes difficult to maintain a membrane structure. The thickness of the composite electrolyte membrane 2 is preferably 10 µm or more and 200 µm or less, and more preferably 11 µm or more and 23 µm or less.

In water electrolysis, hydrogen peroxide, hydroxy radicals and the like are generated during electrolysis, and a membrane is likely to be easily destructed chemically. Therefore, if the hydrocarbon-based electrolyte membrane 1 is used alone, there is a problem in durability. An electrolyte membrane using a perfluorosulfonic acid-based electrolyte is excellent in chemical resistance. However, when laminated with the hydrocarbon-based electrolyte membrane 1, the electrolyte membrane is easily peeled off in water. Therefore, although there is not much problem for use in a fuel cell, it cannot be used for a water electrolysis electrolyte membrane. The composite electrolyte membrane 2 containing a perfluorosulfonic acid based electrolyte and a superstrong acid metal oxide having an acid function (H0) of -12 or less is excellent in chemical resistance and also excellent in adhesion to the hydrocarbon-based electrolyte membrane 1. Therefore, the laminated electrolyte membranes 100 and 101 according to the embodiment are suitable as a water electrolysis electrolyte membrane.

The superstrong acid metal oxide is oxide particles in which an oxide of an element Y containing at least one selected from the group consisting of B, S, W, Mo, and V is supported on an oxide of an element X containing at least one selected from the group consisting of Ti, Zr, Si, Sn, and Al. The primary particle diameter of the oxide particle is preferably 1 nm or more and 1,000 nm or less, and the average primary particle diameter of the oxide particle is more preferably 4 nm or more and 200 nm or less.

The oxide of the element Y supported on the oxide of the element X in the superstrong acid metal oxide is preferably 2 mass% or more and 20 mass% or less. It is not preferable that the supported amount is less than 2 mass% because proton conductivity is lowered. On the other hand, it is not preferable that the supported amount exceeds 20 mass% because the oxide component of the supported element Y tends to dissolve.

Specific examples of the oxides of the element X include, but are not limited to, at least one oxide selected from the group consisting of TiO₂, SiO₂, ZrO₂, SnO₂, SiAlₓOy (0 < x ≤ 2, 2 < y ≤ 5), SiO-Al₂O₃, and TiW_{α}O_{β} (0 < α ≤ 1, 2 < β ≤ 5).

Specific examples of the oxides of the element Y include, but are not limited to, at least one oxide selected from the group consisting of SO₄, BO₃, WO₃, VO_{γ} (1≤γ≤2.5), and MoO₃.

Element distribution in the superstrong acid metal oxide is observed and analyzed by analyzing contained elements and contents by an inductively coupled plasma mass spectrometry (ICP-MS) and by mapping them by a scanning electron microscope/energy dispersive X-ray spectroscopy (SEM-EDX). In addition, it is preferable to use an X-ray diffractometer for specifying the oxide.

The radical scavenger or the hydrogen peroxide decomposer described in the hydrocarbon-based electrolyte membrane 1 is contained in the composite electrolyte membrane 2 at a ratio of 0 mass% or more and 10 mass% or less.

The perfluorosulfonic acid-based electrolyte is preferably a polymer having an acidic group such as sulfonic acid group or sulfonamide group in a fluorine-containing main chain skeleton. The perfluorosulfonic acid-based electrolyte imparts chemical resistance to the composite electrolyte membrane 2 and structural strength to the composite electrolyte membrane 2. Examples of the perfluorosulfonic acid based electrolyte include Nafion (TM, Du Pont), Aquivion (TM, SOLVAY), Flemion (TM, Asahi Kasei Corp.), and Aciplex (TM, Asahi Glass Co., Ltd.).

For preparing a composite membrane including a perfluorosulfonic acid based electrolyte and a superstrong acid metal oxide, a material obtained by dispersing a superstrong acid metal oxide in a perfluorosulfonic acid-based electrolyte dispersion solution is used. A solvent to be used for the dispersion may be any one as long as the perfluorosulfonic acid-based electrolyte and the superstrong acid metal oxide are dispersed in a solvent, and a concentration of the solvent may be any concentration as long as coating is possible. Examples of the solvent include, but are not limited to, water; alcohol solvents such as methanol, ethanol, isopropanol, 1-propanol and ethylene glycol; ether solvents such as tetrahydrofuran and dimethoxyethylene; and aprotic polar solvents such as N, N-dimethylformamide, and N-methylpyrrolidone. As a dispersion solvent, a mixed solvent of various solvents may be used.

As a method for dispersing the superstrong acid oxide in the perfluorosulfonic acid-based electrolyte dispersion solution, an existing method can be used. Examples of the methods include, but are not limited to, a pane shaker, a ball mill, and an ultrasonic dispersion device.

Next, the laminated electrolyte membrane 100 is prepared in which the composite electrolyte membrane 2 is formed on the hydrocarbon-based electrolyte membrane 1 by coating and drying the superstrong acid oxide on the hydrocarbon-based electrolyte membrane 1 by using the dispersed perfluorosulfonic acid electrolyte dispersion. Regarding a coating method, any method can be used as long as coating on an electrolyte membrane is possible, and examples of the method include, but are not limited to, a spin coating method, a blade coating method, an inkjet method, a gravure method, and a spray coating method.

The coated membrane is dried by heating drying, and a temperature thereof is preferably 60°C or more and less than 250°C. A drying time can be adjusted according to a used solvent and the membrane thickness of an electrolyte. If the temperature is less than 60°C, the solvent is not sufficiently volatilized, and if the temperature is 250°C or higher, the electrolyte membrane may be decomposed. In addition, to further improve adhesion of the membrane, it may be pressurized during heating drying. For example, preferably, in the case of hot pressing, a pressure is in the range where membrane deterioration does not occur, specifically, the pressure is preferably less than 50kg/cm². When the pressure is 50kg/cm² or more, a decrease in mechanical strength may occur. In addition, a roll method can be applied as a pressurized heating drying method.

### (Second Embodiment)

A membrane electrode assembly (MEA) according to a second embodiment includes a first electrode, a second electrode, a hydrocarbon-based electrolyte membrane, and a composite electrolyte membrane. The composite electrolyte membrane is laminated with the hydrocarbon-based electrolyte and contains a perfluorosulfonic acid-based electrolyte and a superstrong acid metal oxide having an acid function (H0) of -12 or less. The membrane electrode assembly using a laminated electrolyte membrane according to the embodiment is preferable in that, when it is used for water electrolysis, membrane resistance of the electrolyte membrane is low, crossover is low, and resistance is low.

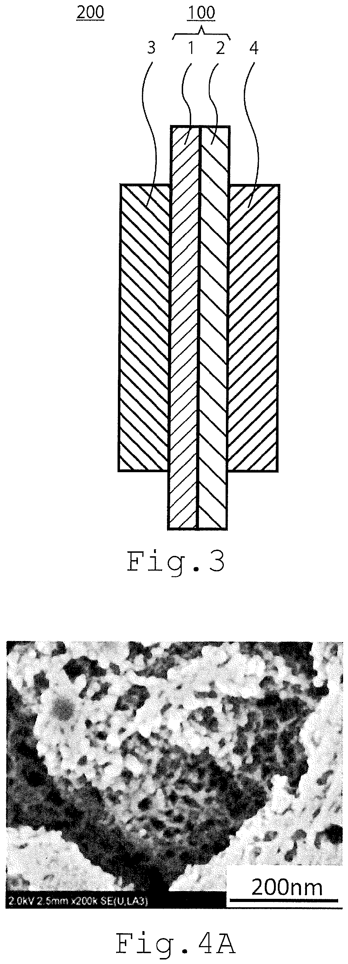

FIG. 3 is a cross-sectional view of a membrane electrode assembly 200 according to the second embodiment. A membrane electrode assembly 200 in FIG. 2 includes a first electrode 3, a second electrode 4, and a laminated electrolyte membrane 100. Instead of the laminated electrolyte membrane 100, a laminated electrolyte membrane 101 may be used.

The first electrode 3 is a cathode. The first electrode 3 includes a catalyst layer in contact with the laminated electrolyte membrane 100 and a support for supporting the catalyst layer. The second electrode 4 is an anode. The first electrode 3 includes a catalyst layer in contact with the laminated electrolyte membrane 100 and a support for supporting the catalyst layer.

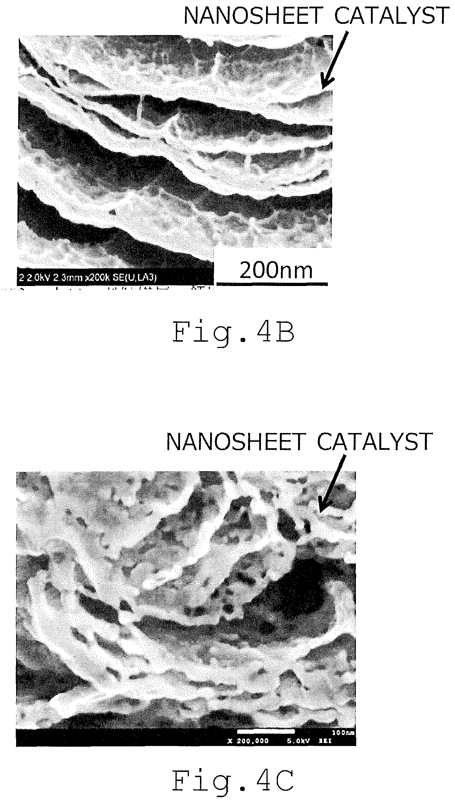

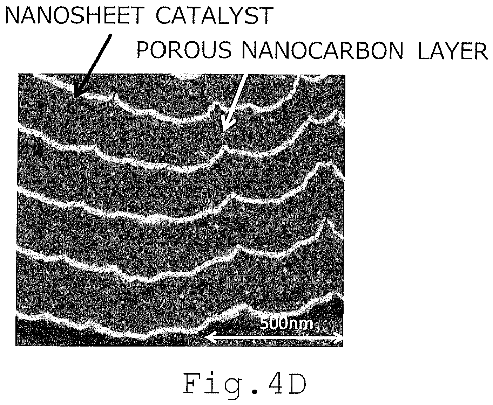

The catalyst layer according to the embodiment is preferably a carrierless porous catalyst layer. To obtain high cell characteristics, a catalyst layer to be used generally includes a supported catalyst in which a catalyst is supported on a surface thereof by using a material such as carbon or a conductive oxide as a support. It has been reported that, although the material of the support hardly contributes to main electrocatalytic reaction, a catalyst material can be controlled for improvement of a reaction area of the catalyst material, and also a pore structure, electric conductivity, ion conductivity and the like can be improved by an electrochemical cell. Carrierless means that a carrier is not used for a catalyst included in a catalyst layer. This catalyst layer includes a catalyst unit having a porous structure or a laminated structure including a gap layer. In the case of using a noble metal catalyst, it is possible to maintain high characteristics and high durability of an electrochemical cell even when a small amount of a noble metal catalyst is used. FIGS. 4A and 4B illustrate a catalyst unit having a porous structure and a catalyst unit having a laminated structure including a gap layer, respectively. FIG. 4A illustrates a catalyst unit having a porous structure. FIG. 4B illustrates a catalyst unit having a laminated structure including a gap layer. In the case where a catalyst material is supported on a carrier, a catalyst is generally nano-sized particles. However, a catalyst in a catalyst unit having a porous structure is sponge-like. A catalyst in a catalyst unit having a laminated structure including a gap layer is nanosheet-like. By using a sponge-like or nanosheet-like catalyst, it is possible to improve characteristics of an electrochemical cell. An electrocatalytic reaction occurs on a catalyst surface, and therefore a catalyst shape affects atomic arrangement and electronic state of the catalyst surface. In a catalyst unit having a laminated structure including a gap layer, adjacent nanosheets are desirably partially integrated. Although a mechanism has not yet been elucidated completely, it is thought that proton conduction or hydrogen atom conduction for electrode reaction can be achieved more smoothly. Further, as indicated in FIG. 4C, higher properties can be obtained by making a nanosheet inside the laminated structure porous. This is because gas diffusion and water management can be improved. Durability and robustness can be further improved by disposing a porous nano-carbon layer (FIG. 4D) containing fibrous carbon or a nanoceramic material layer between the nanosheets inside the laminated structure. The catalyst contributing to main electrode reaction is hardly supported by fibrous carbon contained in the porous nano-carbon layer, and therefore a laminated structural unit including the porous nano-carbon layer is considered to be carrierless. Here, since the movement of substances such as discharge of moisture becomes smoother, a porosity of a catalyst layer is preferably 50 to 90 vol.%. In addition, if the porosity of the catalyst layer is within this range, the substances can be sufficiently moved without lowering the utilization efficiency of a noble metal.

The predetermined catalyst material used for the carrierless catalyst layer according to the embodiment contains at least one selected from the group consisting of noble metal elements such as Pt, Ru, Rh, Os, Ir, Pd, and Au. Such the catalyst material is excellent in catalytic activity, conductivity, and stability. The above-described metal may be used as an oxide and may be a composite oxide or mixed oxide containing two or more kinds of metals.

An optimum noble metal element can be appropriately selected in accordance with a reaction in which the MEA is used.

For example, when a hydrogen production reaction is needed as a water electrolysis cathode, a catalyst having a composition represented by PtᵤM₁₋ᵤ is desirable. Here, u is 0 < u ≤ 1, and an element M is at least one selected from the group consisting of Co, Ni, Fe, Mn, Ta, W, Hf, Si, Mo, Ti, Zr, Nb, V, Cr, Al, and Sn. This catalyst contains Pt of more than 0 atomic% and 90 atomic% or less and the element M of 10 atomic% or more and less than 100 atomic%.

On the other hand, when an oxidation reaction of water (oxygen evolution reaction) is required as a water electrolysis anode, an oxide catalyst containing at least Ir, an oxide catalyst containing at least one of Pt, Ru, and Ir, a metal catalyst containing any one of Pt, Ru, and Ir, or an alloy catalyst containing any one of Pt, Ru, and Ir is desirable. The oxide catalyst is, for example, a catalyst having a composition represented by Ir_{z}M_{1-z}O. Here, z is 0.5 < z, and the element M is at least selected from the group consisting of Co, Ni, Fe, Mn, Ta, W, Hf, Si, Mo, Ti, Zr, Nb, V, Cr, Sr, and Sn. This oxide catalyst contains the element M of 50 atomic% or more or 0 atomic% or more and less than 50 atomic% in the case of considering only a metal component element. Specific examples of an oxide catalyst include an oxide catalyst including metal of at least one selected from the group consisting of Pt, Ru, and Ir of at least one selected from the group consisting of IrO₂, RuO₂, IrRuₓO_{y}, IrNiₓO_{y}, IrSrₓO_{y}, and IrRuₓNi_{y}O_{z} and arbitrary one or more elements M. However, an anode catalyst of the MEA in which the laminated electrolyte membrane 100 according to the embodiment is used is not limited to the above.

A method for manufacturing a carrierless porous catalyst layer according to the embodiment will be briefly described.

First, in the case of manufacturing a catalyst layer having a catalyst unit, a catalyst layer precursor is formed on a support by sputtering or evaporating a catalyst material and a pore-forming agent material at the same time. Next, the pore forming agent is removed to obtain an electrode. In the case of manufacturing a catalyst layer having a unit having a laminate structure including a gap layer, a catalyst layer precursor is formed on a support by alternately sputtering or evaporating a material containing a catalyst material and a pore-forming agent material. Next, the pore forming agent is removed to obtain an electrode.

The MEA according to the embodiment is prepared by combining an electrolyte membrane by using the above-described catalyst layer as at least either of the first electrode 3 or the second electrode 4. In general, the catalyst layer and the electrolyte membrane are bonded by heating and pressurizing. In this case, in the case where a forming support of the catalyst layer is a gas diffusion layer, the electrolyte membrane 100 is sandwiched with a support containing the catalyst layer and laminated as indicated in FIG. 3 and joined to obtain the MEA 200.

Further, in the case where the forming support of the catalyst layer is a transfer substrate, first, the catalyst layer is transferred from the transfer substrate to the electrolyte membrane 100, the catalyst layer is transferred to the electrolyte membrane 100, and the membrane catalyst layer assembly (catalyst coated membrane (CCM)) is prepared. Then, the CCM is laminated as indicated in FIG. 3 by sandwiching two gas diffusion supports and bonded by heating and pressuring to obtain the MEA 200. Alternatively, after transferring at least one of the catalyst layers to the electrolyte membrane 100, the gas diffusion layer may be disposed on the catalyst layer. These are laminated as indicated in FIG. 3 and joined by heating and pressurizing to obtain the MEA 200.

### (Third Embodiment)

A water electrolysis cell according to a third embodiment includes a membrane electrode assembly, a cathode feed conductor, a separator, a gasket (seal), an anode feed conductor, a separator, and a gasket (seal). The membrane electrode assembly includes a first electrode, a second electrode, a hydrocarbon-based electrolyte membrane, and a composite electrolyte membrane. The composite electrolyte membrane is laminated with the hydrocarbon-based electrolyte membrane and contains a perfluorosulfonic acid-based electrolyte and a superstrong acid metal oxide having an acid function (H0) of -12 or less. Since highly efficient water electrolysis can be performed, the water electrolysis cell using a laminated electrolyte membrane according to the embodiment is preferable in that, when it is used for water electrolysis, membrane resistance of the electrolyte membrane is low, crossover is low, and resistance is low.

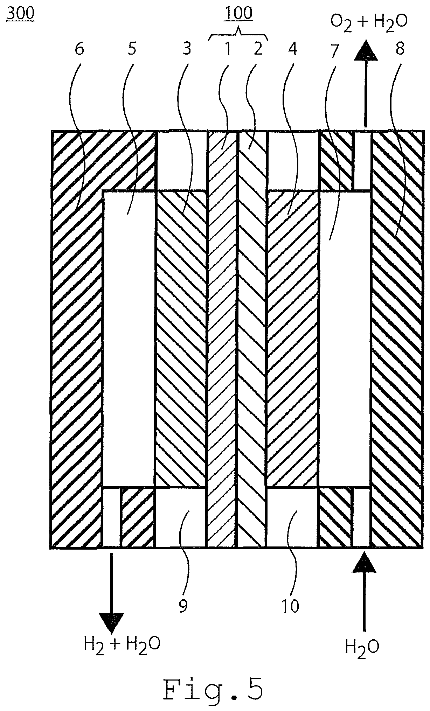

FIG. 5 is a cross-sectional view of a water electrolysis cell 300 according to the third embodiment. The water electrolysis cell 300 illustrated in FIGS. 4A to 4D includes a first electrode (cathode) 3, a second electrode (anode) 4, a laminated electrolyte membrane 100, a cathode feed conductor 5, a separator 6, an anode feed conductor 7, a separator 8, a gasket (seal) 9, and a gasket (seal) 10. Instead of the laminated electrolyte membrane 100, a laminated electrolyte membrane 101 may be used. Any type of anode feed conductors and cathode feed conductors may be used as long as gas and water can pass through. In addition, each of the feed conductors may be integrated with a separator. Specifically, the feed conductor is, for example, a feed conductor having a flow path through which water or gas flows in a separator and a feed conductor having a porous body, but is not limited thereto.

In the water electrolysis cell 300 illustrated in FIG. 5, an electrode (not illustrated) is connected to the cathode feed conductor 5 and the anode feed conductor 7, and a reaction occurs between the cathode and the anode. Water is supplied to the anode, and water is decomposed into protons, oxygen and electrons at the anode electrode. A support of the electrode and the feed conductor are porous bodies, and this porous body functions as a flow path plate. The generated water and unreacted water are discharged, and protons and electrons are used in a cathode reaction through the laminated electrolyte membrane 100. In the cathode reaction, protons and electrons react to produce hydrogen. Either one or both of the generated hydrogen and oxygen are used, for example, as fuel for a fuel cell. A membrane electrode assembly is held by the separators 6 and 8, and airtightness is maintained by gaskets (seals) 9 and 10.

The laminated electrolyte membrane 100 according to the embodiment is difficult to separate in water and therefore excellent in durability. In addition, the laminated electrolyte membrane 100 according to the embodiment is excellent in chemical resistance and has low membrane resistance, and therefore has low crossover and is excellent in decomposition efficiency.

### (Fourth Embodiment)

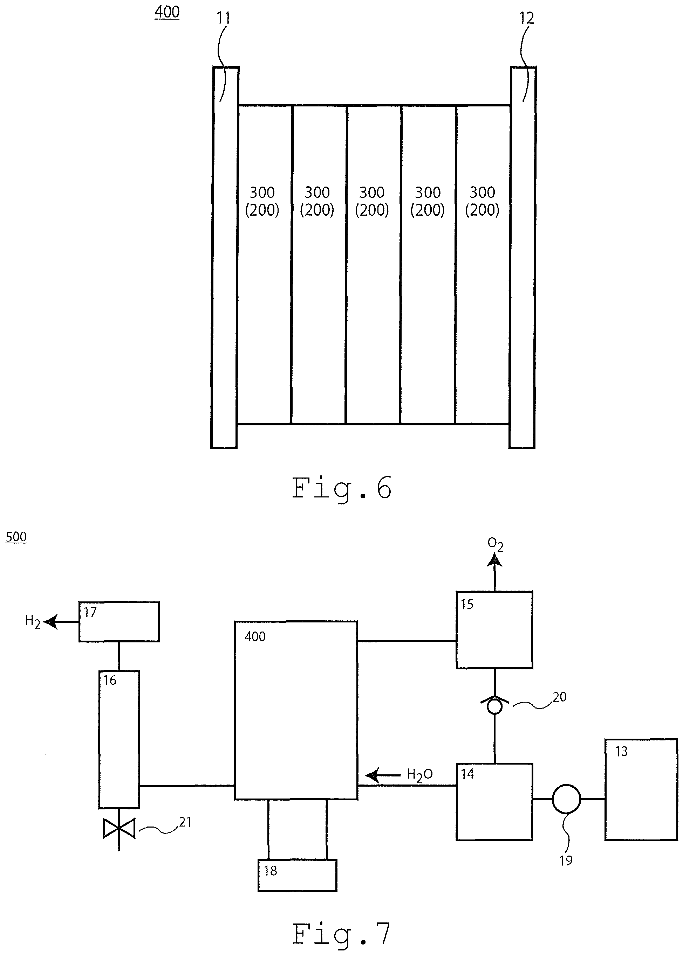

A plurality of membrane electrode assemblies 200 or a plurality of water electrolysis cells is connected in series in a stack 400 according to a fourth embodiment illustrated in FIG. 6. Tightening plates 11 and 12 are attached to both ends of the water electrolysis cell.

### (Fifth Embodiment)

A fifth embodiment relates to a water electrolysis apparatus. For the water electrolysis apparatus, a stack 400 according to the embodiment is used. The water electrolysis apparatus will be described with reference to a schematic diagram in FIG. 7. Water electrolysis single cells illustrated in FIG. 7 laminated in series are used as the water electrolysis stack 400. A power source 18 is attached to the water electrolysis stack 400, and a voltage is applied between an anode and a cathode. On the anode side of the water electrolysis stack 400, a gas-liquid separator 15 for separating generated gas and unreacted water and a mixing tank 14 are connected. To the mixing tank 14, water is sent by a pump 19 from an ion exchange water manufacturing device 13 which supplies water, and the water is circulated to the anode by mixing in the mixing tank 14 from the gas-liquid separator 15 through a check valve 20. Oxygen generated at the anode passes through the gas-liquid separator 15, and oxygen gas is obtained. On the other hand, on the cathode side, a hydrogen purification device 17 is continuously connected to a gas-liquid separator 16 to obtain high purity hydrogen. Impurities are discharged via a path including a valve 21 connected to the hydrogen purification device 17. To stably control an operating temperature, it is possible to control heating of the stack and the mixing tank and a current density during thermal decomposition.

Hereinafter, the above embodiments will be described in detail in examples.

### (Examples 1 to 11 and Comparative Examples 1 to 4)

### (Adjustment of Coating Solution for Composite Membrane)

A coating solution for a composite membrane is adjusted by adding 20 g of ethanol to a predetermined amount of a fluorine-based electrolyte dispersion (20% nafion dispersion solution, Du Pont) in a polyhot, adding a superstrong acid oxide and a predetermined amount thereof, and adding 40 zirconia balls (diameter 5 mm), and dispersing them for 10 minutes by using Rentaro (Thinky Corporation). Compositions of the prepared dispersion in examples 1 to 11 and comparative examples 1 to 4 are summarized in Table 1. In example 7, 8 and comparative example 2, decomposer (hydrogen peroxide decomposer) is used for preparing dispersion.

### (Preparation of Superstrong Acid Oxide)

### Synthesis of MoO₃/TiO₂

An aqueous solution is adjusted in which hexammonium heptamolybdate tetrahydrate (manufactured by Wako Pure Chemical Industries, Ltd.) (NH₄)₆Mo₇O₂₄, 4H₂O is dissolved in water. The aqueous solution is mixed with a dispersion (containing 2 mL of concentrated HCl) in which titanium oxide (Super Titania F-6 and F-4, made by Showa Denko K.K.) TiO₂ is dispersed in water. The mixture is evaporated to dryness at 80°C to support ammonium molybdate on TiO₂. The obtained precursor is dried at 100°C for 6H and then calcined at 600°C for 4H, and ammonium molybdate is thermally decomposed to obtain MoO₃/TiO₂. The composition of MoO₃/TiO₂ is 5/95 by a weight ratio.

### Synthesis of WO₃/TiO₂

An aqueous solution is adjusted in which tungsten oxide (Wako Pure Chemical Industries, Ltd.) WO₃ is dissolved in heated condensed ammonia aqueous solution (made by Wako Pure Chemical Industries, Ltd., 15% aqueous solution). This aqueous solution is mixed with a dispersion in which titanium oxide (Super Titania F- 6 Showa Denko K.K.) TiO₂ is dispersed in water. This aqueous solution is evaporated to dryness at 80°C to support ammonium tungstate on TiO₂. The obtained precursor is dried at 100°C for 6H and then calcined at 700°C for 4H, and ammonium tungstate is thermally decomposed to obtain WO₃/TiO₂.

Two kinds of compositions of WO₃/TiO₂ at a weight ratio of 5/95 and 10/90 are prepared.

### Synthesis of VO₃/TiO₂

An aqueous solution is adjusted in which ammonium metavanadate (Wako Pure Chemical Industries, Ltd.) (NH₄)VO₃ is dissolved in hot water. The aqueous solution is mixed with a dispersion (containing 2 mL of concentrated HCl) in which titanium oxide (Super Titania F-6 and F-4, Showa Denko K.K.) TiO₂ is dispersed in water. The mixture was evaporated to dryness at 80°C to support ammonium metavanadate on TiO₂. The obtained precursor was dried at 100 °C for 6H and then calcined at 600°C for 4H, and ammonium metavanadate is thermally decomposed to obtain VO₃/TiO₂.

The composition of MoO₃/TiO₂ is 5/95 by a weight ratio.

### Synthesis of WO₃/ZrO₂

An aqueous solution is adjusted in which tungsten oxide (Wako Pure Chemical Industries, Ltd.) WO₃ is dissolved in heated condensed ammonia aqueous solution (Wako Pure Chemical Industries, 15% aqueous solution). This aqueous solution is mixed with a dispersion in which zirconium oxide (Wako Pure Chemical Industries, Ltd.) ZrO₂ is dispersed in water. This aqueous solution is evaporated to dryness at 80°C to support ammonium tungstate on TiO₂. The obtained precursor is dried at 100°C for 6H and then calcined at 700°C for 4H, and ammonium tungstate is thermally decomposed to obtain WO₃/TiO₂.

Two kinds of compositions of WO₃/TiO₂ at a weight ratio of 5/95 and 20/90 are prepared.

### Synthesis of SO₄/TiO₂

A dispersion of titanium oxide is adjusted by mixing 9.500g of titanium oxide (TiO₂, Tayca, AMT-100) and 300 mL of water in a 1,000 mL beaker. Evaporation to dryness is performed by mixing 0.521g of concentrated sulfuric acid (96%) with this dispersion, further adding water to make the total volume 400 mL, and stirring the solution by a hot stirrer set at 140°C. A precursor is pulverized and passed through a 106 µm sieve, placed on a baking dish, and fired at 600°C for 3 hours to obtain sulfuric acid-supported titanium oxide SO₄/TiO₂. Composition analysis by ICP analysis reveals that S is 0.64% (1.92% in terms of SO₄), TiO₂ is 95.0%, and the rest is moisture. Therefore, the SO₄ supporting amount is 2.0% in a state where moisture is removed.

### Synthesis of SO₄/ZrO₂

A dispersion of titanium oxide is adjusted by mixing 9. 500g of zirconium oxide (made by Wako Pure Chemical Industries, Ltd.) and 300 mL of water in a 1000 mL beaker. Evaporation to dryness is performed by mixing 1.01g of concentrated sulfuric acid (96%) with this dispersion, further adding water to make the total volume 400 mL, and stirring the solution by a hot stirrer set at 140°C. A precursor is pulverized and passed through a 106 µm sieve, placed on a baking dish, and fired at 600°C for 3 hours to obtain sulfuric acid-supported titanium oxide SO₄/TiO₂. Composition analysis by ICP analysis reveals that S is 0.96% (2.88% in terms of SO₄), TiO₂ is 96.0%, and the rest is moisture. Therefore, the SO₄ supporting amount is 3.0% in a state where moisture is removed.

**[Table 1A]**

| | Coating solution No. | Ionomer | | Superstrong acid oxide | | |
|---|---|---|---|---|---|---|
| | | Addition amount (g) | Solid content weight % | Type | Addition amount (g) | Solid content weight % |
| Example 1 | S1 | 4.050 | 45.0 | 5% VO₃/TiO₂ | 0.990 | 55.0 |
| Example 2 | S2 | 2.971 | 33.0 | 5% WO₃/TiO₂ | 1.206 | 67.0 |
| Example 3 | S3 | 6.283 | 70.0 | 10% WO₃/TiO₂ | 0.542 | 30.0 |
| Example 4 | S4 | 3.601 | 40.0 | 5% MoO₃/TiO₂ | 1.080 | 60.0 |
| Example 5 | S5 | 3.150 | 35.0 | 5% WO₃/ZrO₂ | 1.170 | 65.0 |
| Example 6 | S6 | 3.150 | 35.0 | 5% WO₃/SnO₂ | 1.170 | 65.0 |
| Example 7 | S7 | 3.040 | 32.8 | 5% WO₃/TiO₂ | 1.207 | 65.3 |
| Example 8 | S8 | 4.182 | 42.4 | 5% WO₃/TiO₂ | 0.901 | 50.0 |
| Example 9 | S9 | 2.703 | 30.0 | 2% SO₄/TiO₂ | 1.260 | 70.0 |
| Example 10 | S10 | 1.800 | 20.0 | 3% SO₄/ZrO₂ | 1.440 | 80.0 |
| Example 11 | S11 | 7.204 | 80.0 | 20% WO₃/ZrO₂ | 0.360 | 20.0 |
| Comparative Example 1 | CS1 | 9.000 | 100.0 | Nothing | | |
| Comparative Example 2 | CS2 | 1.350 | 15.0 | 10% WO₃/TiO₂ | 1.350 | 75.0 |
| Comparative Example 3 | CS3 | 1.530 | 17.0 | 20% WO₃/ZrO₂ | 1.494 | 83.0 |
| Comparative Example 4 | CS4 | 7.380 | 82.0 | 5% WO₃/TiO₂ | 0.324 | 18.0 |

**[Table 1B]**

| | Decomposer | | |
|---|---|---|---|
| | Type | Addition amount (g) | Solid content weight % |
| Example 1 | Nothing | | |
| Example 2 | Nothing | | |
| Example 3 | Nothing | | |
| Example 4 | Nothing | | |
| Example 5 | Nothing | | |
| Example 6 | Nothing | | |
| Example 7 | CeO₂ | 0.034 | 1.9 |
| Example 8 | MnO₂ | 0.064 | 3.6 |
| Example 9 | Nothing | | |
| Example 10 | Nothing | | |
| Example 11 | Nothing | | |
| Comparative Example 1 | Nothing | | |
| Comparative Example 2 | CeO₂ | 0.18 | 10 |
| Comparative Example 3 | Nothing | | |
| Comparative Example 4 | Nothing | | |

### (Examples 12 to 25 and Comparative Examples 5 to 10)

### Preparation of Composite Laminated Membrane

A composite laminated membrane is prepared by spraying the above-described adjusted dispersion for a composite membrane on various membrane thickness aromatic hydrocarbon-based electrolyte membranes (EW □ 400), drying the membranes at 60°C for 10 minutes, drying at 130°C for 10 minutes, and further drying at 180°C for 10 minutes while pressurizing at 10 kg/cm². Table 2 indicates the prepared various membranes in examples 12 to 25 and comparative examples 5 to 10.

### (Comparative Example 11)

A three-layered laminated membrane (comparative example 11) is prepared by stacking a naf ion HP membrane, a 13 µm membrane of the aromatic hydrocarbon-based electrolyte membrane, and a nafion HP membrane in this order and heating and compressing them at 180°C for 10 minutes while pressurizing to 10 kg/cm².

### (Immersion Test)

Ion exchanged water is sufficiently poured in a beaker, and an immersion test is performed in which the above-described prepared composite laminated membrane is immersed for 5 minutes at room temperature. In Table 2, the case where the membrane is peeled off at an interface of the laminated membrane is marked with x, and the case where the membrane is not peeled off is marked with o.

### (Preparation of Anode Electrode and Cathode Electrode)

An anode electrode is prepared by sputtering IrNiₓO_{y} and a gap agent by reactive sputtering on a 200 µm-thick titanium porous body, and etching, heating, and drying after acid treatment. An IrNiₓO_{y} catalyst layer is an Ir amount of 0.15 mg/cm² (22 layers).

### (Preparation of Cathode Electrode)

A cathode electrode is prepared by etching with acid and heating and drying after washing with water after sputtering on a Carpon Paper with a cathode electrode MPL (microporous layer). A PtCo alloy catalyst is a platinum amount of 0.18 mg/cm² (28 layers).

**[Table 2A]**

| | Membrane No. | Aromatic hydrocarbon-based electrolyte membrane Membrane thickness (nm) | Coating solution No. | Membrane thickness of coating membrane (µm) |
|---|---|---|---|---|
| Example 13 | M1 | 40 | S1 | 12 |
| Example 14 | M2 | 13 | S2 | 20 |
| Example 15 | M3 | 40 | S2 | 11 |
| Example 16 | M4 | 13 | S3 | 23 |
| Example 17 | M5 | 40 | S4 | 12 |
| Example 18 | M6 | 40 | S5 | 13 |
| Example 19 | M7 | 40 | S6 | 11 |
| Example 20 | M8 | 40 | S7 | 12 |
| Example 21 | M9 | 13 | S8 | 21 |
| Example 22 | M10 | 40 | S9 | 12 |
| Example 23 | M11 | 40 | S10 | 13 |
| Example 25 | M12 | 13 | S11 | 20 |
| Example 26 | M13 | 13 | S8 | 11 and 11 |
| Comparative Example 5 | CM1 | 13 | Nothing | |
| Comparative Example 6 | CM2 | 40 | Nothing | |
| Comparative Example 7 | CM3 | 40 | CS1 | 13 |
| Comparative Example 8 | CM4 | 40 | CS2 | 12 |
| Comparative Example 9 | CM5 | 40 | CS3 | 14 |
| Comparative Example 10 | CM6 | 40 | CS4 | 12 |
| Comparative Example 11 | CM7 | 13 | Paste nafion HP membranes on both sides | |

**[Table 2B]**

| | Accumulated membrane structure | Immersion test |
|---|---|---|
| Example 13 | Two layers (one side coating membrane) | ○ |
| Example 14 | Two layers (one side coating membrane) | ○ |
| Example 15 | Two layers (one side coating membrane) | ○ |
| Example 16 | Two layers (one side coating membrane) | ○ |
| Example 17 | Two layers (one side coating membrane) | ○ |
| Example 18 | Two layers (one side coating membrane) | ○ |
| Example 19 | Two layers (one side coating membrane) | ○ |
| Example 20 | Two layers (one side coating membrane) | ○ |
| Example 21 | Two layers (one side coating membrane) | ○ |
| Example 22 | Two layers (one side coating membrane) | ○ |
| Example 23 | Two layers (one side coating membrane) | ○ |
| Example 25 | Two layers (one side coating membrane) | ○ |
| Example 26 | Three layers (double coated) | ○ |
| Comparative Example 5 | Single layer (single membrane) | - |
| Comparative Example 6 | Single layer (single membrane) | - |
| Comparative Example 7 | Two layers | × |
| Comparative Example 8 | Two layers | ○ |
| Comparative Example 9 | Two layers | ○ |
| Comparative Example 10 | Two layers | ○ |
| Comparative Example 11 | Three layers | × |

### (Examples 25 to 37 and Comparative Examples 13 to 17)

### (Preparation of Membrane Electrode Assembly)

Each of the anode electrode and the cathode electrode are cut to 20 mm square each. The anode electrode, a laminated electrolyte membrane, and the cathode electrode are sequentially stacked and pressure-bonded by hot pressing (50 kg, 165°C, 4 minutes), and then cooled to room temperature to prepare an MEA. The process is summarized in Table 3. However, when the composite laminated membrane has two layers, an aromatic hydrocarbon-based electrolyte membrane side is prepared as a cathode electrode side.

### (Comparative Example 12)

An MEA (comparative example 12) is prepared by using nafion 115 as a membrane in the same manner as preparation conditions for the above-described MEA.

### (Evaluation of Water Electrolysis Performance)

In a titanium water electrolysis cell, as a feed conductor (integrated with a separator) of an anode and a cathode, a flow channel plate of titanium is used, and a single cell (anode & cathode; straight channel) having an electrode area of 4 cm² is used. The cell temperature is 80°C at atmospheric pressure, and the temperature is maintained by heating by a heater, and ion-exchanged water is used by circulating, to the anode, several times the amount of water necessary for water decomposition. Water electrolysis is performed at a cell temperature of 80°C by using an electronic load device manufactured by Kikusui Corporation at a current density of 2 A/cm². Decomposition voltages of water and AC impedance resistance at 1 KHz in such a case are summarized in Table 3.

### (Measurement of Hydrogen Crossover)

Water decomposition is carried out at a constant current of the above-described water electrolysis conditions, gas coming out from the anode side is separated by water and repaired for 30 minutes, and a hydrogen concentration is measured by GC-MS. Measurement results are indicated in Table 3.

**[Table 3]**

| MEA | Membrane No. | Initial | | After 50 h | | Hydrogen leak amount (%) |
|---|---|---|---|---|---|---|
| | | Voltage (V) @2 A/cm² | Resistance (mΩ) | Voltage (V) @2 A/cm² | Resistance (mΩ) | |
| Example 27 | M1 | 1.83 | 30.2 | 1.82 | 27.2 | 0.12 |
| Example 28 | M2 | 1.78 | 23.2 | 1.81 | 23.0 | 0.30 |
| Example 29 | M3 | 1.81 | 27.0 | 1.83 | 27.5 | 0.13 |
| Example 30 | M4 | 1.78 | 23.2 | 1.81 | 23.0 | 0.29 |
| Example 31 | M5 | 1.82 | 27.5 | 1.83 | 28.0 | 0.11 |
| Example 32 | M6 | 1.84 | 30.4 | 1.83 | 29.5 | 0.10 |
| Example 33 | M7 | 1.85 | 31.2 | 1.83 | 29.7 | 0.11 |
| Example 34 | M8 | 1.87 | 31.2 | 1.83 | 27.5 | 0.12 |
| Example 35 | M9 | 1.77 | 23.1 | 1.80 | 24.0 | 0.29 |
| Example 36 | M10 | 1.85 | 31.2 | 1.83 | 29.5 | 0.09 |
| Example 37 | M11 | 1.87 | 31.2 | 1.84 | 28.5 | 0.14 |
| Example 38 | M12 | 1.78 | 22.2 | 1.81 | 23.0 | 0.32 |
| Example 39 | M13 | 1.80 | 25.6 | 1.81 | 26.1 | 0.21 |
| Comparative Example 12 | nafion115 | 1.90 | 35.0 | 1.86 | 31.2 | 0.82 |
| Comparative Example 13 | CM1 | 1.69 | 16.7 | An abnormal value is indicated by thinning or pinhole | | 0.40 (initial) |
| Comparative Example 14 | CM2 | 1.75 | 21.2 | An abnormal value is indicated by thinning or pinhole | | 0.18 (initial) |
| Comparative Example 15 | CM4 | 1.93 | 35.1 | 1.92 | 36.2 | 0.14 |
| Comparative Example 16 | CM5 | Cannot measure | | Cannot measure | | - |
| Comparative Example 17 | CM6 | 1.80 | 28.0 | Cannot measure | | - |

As indicated in the comparative examples 7 and 11 in Table 2, interface peeling occurred in a laminated membrane in which a fluorine-based electrolyte membrane is simply laminated on an aromatic hydrocarbon-based electrolyte membrane. On the other hand, in the composite laminated membrane, peeling is not observed in an immersion test. As indicated in Table 3, it is revealed that when the aromatic hydrocarbon-based electrolyte membrane is used alone, durability is not sufficient in water electrolysis characteristics. However, it is revealed that durability of the composite laminated membrane is improved without problems after 50h. In addition, in any case, the MEA using the composite membrane is highly efficient because crossover is low, membrane resistance is low, and a voltage is low in comparison with the comparative example 12 in which nafion 115, standard used in PEM type water electrolysis, is used.

Here, some elements are expressed only by element symbols thereof.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Clauses

clause 1. A laminated electrolyte membrane, comprising:
   a hydrocarbon-based electrolyte membrane; and
   a composite electrolyte membrane laminated with the hydrocarbon-based electrolyte, the composite electrolyte membrane containing a perfluorosulfonic acid-based electrolyte and a superstrong acid metal oxide having an acid function (H0) of -12 or less.
clause 2. The membrane according to clause 1, wherein the superstrong acid metal oxide having the acid function (H0) of -12 or less in the composite electrolyte membrane is 20 mass% or more and 80 mass% or less.
clause 3. The membrane according to clause 1 or 2, wherein, in the superstrong acid metal oxide, an oxide of an element Y containing at least one selected from the group consisting of: B, S, W, Mo, and V is supported on an oxide of an element X containing at least one selected from the group consisting of: Ti, Zr, Si, Sn, and Al.
clause 4. The membrane according to clause 3, wherein the oxide of the element Y in the superstrong acid metal oxide is 2 mass% or more and 20 mass% or less.
clause 5. The membrane according to clause 3 or 4, wherein the oxide of the element X is one or more oxides selected from the group consisting of: TiO₂, SiO₂, ZrO₂, SnO₂, SiAlₓOy (0 <x ≤ 2, 2 < y ≤ 5), SiO-Al₂O₃, and TiW_{α}O_{β} (0 < α ≤ 1, 2 < β ≤ 5), and the oxide of the element Y is one or more oxides selected from the group consisting of: SO₄, BO₃, WO₃, VO_{γ} (1 ≤ γ ≤ 2.5 or less), and MoO₃.
clause 6. The membrane according to any one of clauses 1 to 5, wherein the composite electrolyte membrane contains a radical scavenger or a hydrogen peroxide decomposer of 10 mass% or less.
clause 7. The membrane according to any one of clauses 1 to 6, wherein the composite electrolyte membrane has a thickness of 10 µm or more and 200 µm or less.
clause 8. The membrane according to any one of clauses 1 to 7, wherein the composite electrolyte membrane has a thickness of 11 µm or more and 23 µm or less.
clause 9. The membrane according to clause 3 or 4, wherein the superstrong acid metal oxide is oxide particles, and the average primary particle diameter of the superstrong acid metal oxide is 1 nm or more and 1,000 nm or less.
clause 10. The membrane according to any one of clauses 3, 4, and 9, wherein the superstrong acid metal oxide is oxide particles, and the average primary particle diameter of the superstrong acid metal oxide is 4 nm or more and 200 nm or less.
clause 11. The membrane according to any one of clauses 1 to 10, wherein the thickness of the laminated electrolyte membrane is 20 µm or more and 400 µm or less, and the thickness of the hydrocarbon-based electrolyte membrane is 10 µm or more and 150 µm or less.
clause 12. The membrane according to any one of clauses 1 to 11, wherein the composite electrolyte membrane has a thickness of 10 µm or more and 200 µm or less.
clause 13. A membrane electrode assembly comprising:
   a first electrode;
   a second electrode; and
   the laminated electrolyte membrane according to any one of clauses 1 to 12 between the first electrode and the second electrode.
clause 14. A water electrolysis cell using the membrane electrode assembly according to clause 13.
clause 15. A stack using the membrane electrode assembly according to clause 13 or the water electrolysis cell 14.
clause 16. A water electrolysis apparatus using the membrane electrode assembly according to clause 13, the water electrolysis cell according to clause 14, or the stack according to clause 15.

## Claims

1. A laminated electrolyte membrane, comprising:
a hydrocarbon-based electrolyte membrane; and
a composite electrolyte membrane laminated with the hydrocarbon-based electrolyte, the composite electrolyte membrane containing a perfluorosulfonic acid-based electrolyte and a superstrong acid metal oxide having an acid function (H0) of -12 or less.

2. The membrane according to claim 1, wherein the superstrong acid metal oxide having the acid function (H0) of -12 or less in the composite electrolyte membrane is 20 mass% or more and 80 mass% or less.

3. The membrane according to claim 1 or 2, wherein, in the superstrong acid metal oxide, an oxide of an element Y containing at least one selected from the group consisting of: B, S, W, Mo, and V is supported on an oxide of an element X containing at least one selected from the group consisting of: Ti, Zr, Si, Sn, and Al.

4. The membrane according to claim 3, wherein the oxide of the element Y in the superstrong acid metal oxide is 2 mass% or more and 20 mass% or less.

5. The membrane according to claim 3 or 4, wherein the oxide of the element X is one or more oxides selected from the group consisting of: TiO₂, SiO₂, ZrO₂, SnO₂, SiAlₓOy (0 <x ≤ 2, 2 <y ≤ 5), SiO-Al₂O₃, and TiW_{α}O_{β} (0 < α ≤ 1, 2 < β ≤ 5), and the oxide of the element Y is one or more oxides selected from the group consisting of: SO₄, BO₃, WO₃, VO_{γ} (1 ≤ γ ≤ 2.5 or less), and MoO₃.

6. The membrane according to any one of claims 1 to 5, wherein the composite electrolyte membrane contains a radical scavenger or a hydrogen peroxide decomposer of 10 mass% or less.

7. The membrane according to any one of claims 1 to 6, wherein the composite electrolyte membrane has a thickness of 10 µm or more and 200 µm or less.

8. The membrane according to any one of claims 1 to 7, wherein the composite electrolyte membrane has a thickness of 11 µm or more and 23 µm or less.

9. The membrane according to any one of claims 3 to 5, wherein the superstrong acid metal oxide is oxide particles, and the average primary particle diameter of the superstrong acid metal oxide is 1 nm or more and 1,000 nm or less.

10. The membrane according to any one of claims 3 to 5 and 9, wherein the superstrong acid metal oxide is oxide particles, and the average primary particle diameter of the superstrong acid metal oxide is 4 nm or more and 200 nm or less.

11. The membrane according to any one of claims 1 to 10, wherein the thickness of the laminated electrolyte membrane is 20 µm or more and 400 µm or less, and the thickness of the hydrocarbon-based electrolyte membrane is 10 µm or more and 150 µm or less.

12. The membrane according to any one of claims 1 to 11, wherein the composite electrolyte membrane has a thickness of 10 µm or more and 200 µm or less.

13. A membrane electrode assembly comprising:
a first electrode;
a second electrode; and
the laminated electrolyte membrane according to any one of claims 1 to 12 between the first electrode and the second electrode.

14. A water electrolysis cell using the membrane electrode assembly according to claim 13.

15. A stack using the membrane electrode assembly according to claim 13 or the water electrolysis cell 14.

16. A water electrolysis apparatus using the membrane electrode assembly according to claim 13, the water electrolysis cell according to claim 14, or the stack according to claim 15.
